# EUROPÄISCHE PATENTSCHRIFT

(11) **EP 1 151 662 B1**
(45) Veröffentlichungstag und Bekanntmachung des Hinweises auf die Patenterteilung: **15.09.2004**
(21) Anmeldenummer: 01109565.0
(22) Anmeldetag: 18.04.2001
(51) Int. Cl.: A01F 29/20

(54) **Häckselvorrichtung, insbesondere für selbstfahrende Feldhäcksler**
Chopping device especially for self-propelled forage harvester
Dispositif hacheur en particulier pour faucheuse-hacheuse automotrice

(30) Priorität: 04.05.2000 DE 10021659
(43) Veröffentlichungstag der Anmeldung: 07.11.2001
(73) Patentinhaber: Maschinenfabrik Bernard Krone GmbH, 48480 Spelle (DE)
(72) Erfinder: Krone, Bernard, Dr., 48480 Spelle (DE); Strobel, Thomas, 01833 Stolpen OT Langenwolmshof (DE)
(74) Vertreter: Busse & Busse Patentanwälte

(56) Entgegenhaltungen:
- EP-A- 0 402 634
- DE-A- 4 134 957
- DE-A- 19 633 290
- FR-A- 2 559 992
- GB-A- 2 025 205
- US-A- 4 055 309

## Beschreibung

Die Erfindung bezieht sich auf eine Häckselvorrichtung, insbesondere für selbstfahrende Feldhäcksler, in einer Ausgestaltung gemäß dem Oberbegriff des Anspruchs 1.

Bei einer bekannten Vorrichtung dieser Art (DE 41 34 957 C2) greift an den Enden des Trägerbalkens je ein Hebelarm an, der mit je einem Einstellmotor verbunden ist. Durch Betätigung der Einstellmotoren ist die Gegenschneide, die parallel zur Drehachse der Messertrommel ausgerichtet ist, an den Arbeitskreis der Schneidmesser der Schneidtrommel heran- und von dieser hinwegbewegbar, wobei auf die Hebelarme wirkende Reibungsbremsen ein unabsichtliches Verstellen der Hebelarme verhindern.

Ferner ist eine Häckselvorrichtung bekannt (EP 0 291 216 B1), bei der die Gegenschneide auf einem Trägerbalken aufliegt und mittels Stellmotoren in ihrer Lage zur Arbeitsfläche der Schneidmesser der Messertrommel verstellbar sind. Die Stellmotoren wirken dabei gemeinsam oder getrennt auf die Enden der Gegenschneide mittels Gewindestangen ein.

Die Erfindung befaßt sich mit dem Problem einer besonders einfachen, dabei aber sehr präzisen Einstellbarkeit der Gegenschneide zur Arbeitsfläche der Schneidmesser der Messertrommel. Die Erfindung löst dieses Problem mit einer Häckselvorrichtung mit den Merkmalen des Anspruchs 1. Hinsichtlich wesentlicher weiterer Ausgestaltungen wird auf die Ansprüche 2 bis 15 verwiesen.

Die Häckselvorrichtung nach der Erfindung ermöglicht eine erste Einstellbewegung der Gegenschneide parallel zu sich selbst durch Verschwenken des Trägerbalkens und darüber hinaus eine weitere Einstellung durch Verschwenken der Gegenschneide um eine konkrete Mittelachse, wodurch es möglich ist, die Gegenschneide mit sehr einfachen, motorisch gut beherrschbaren Bewegungen sehr genau auf die von den Schneidmessern durchlaufene Arbeitsfläche anpassend auszurichten. Durch Auflage der Gegenschneide unter Federdruck schlüssig auf dem Trägerbalken ist sichergestellt, daß die Gegenschneide ihre eingestellte Lage im Betrieb bis zum nächsten Einstellvorgang zuverlässig beibehält.

Weitere Einzelheiten und Wirkungen ergeben sich aus der nachfolgenden Beschreibung und der Zeichnung, in der ein Ausführungsbeispiel des Gegenstands der Erfindung näher veranschaulicht ist. Im einzelnen zeigen:
- Fig. 1: eine Seitenansicht eines selbstfahrenden, eine Häckselvorrichtung nach der Erfindung umfassenden Feldhäckslers,

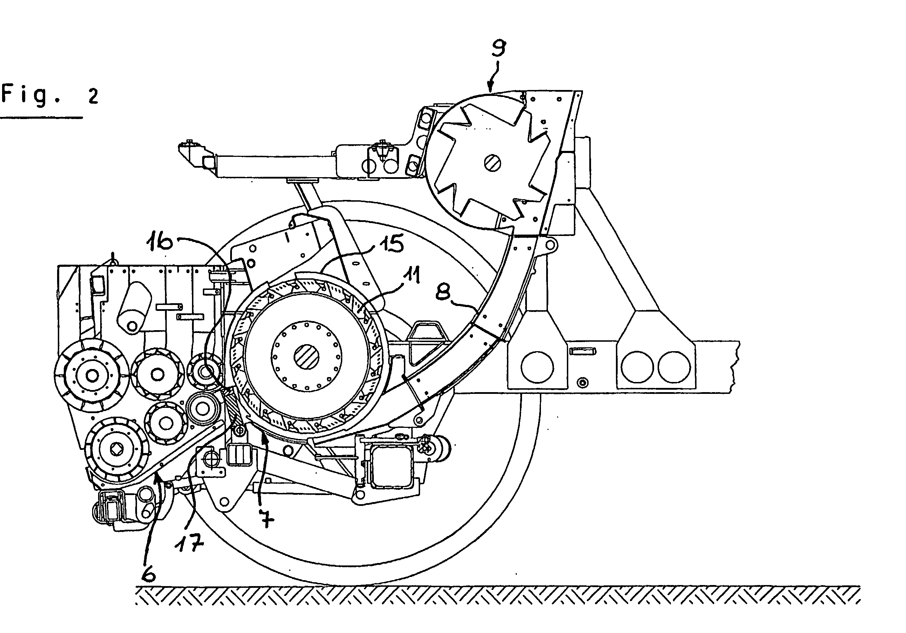

- Fig. 2: eine abgebrochene, teilweise geschnittene schematische Darstellung eines die Häckselvorrichtung einschließenden Teils des Feldhäckslers,
- Fig. 3: eine Einzeldarstellung der Häckselvorrichtung aus Fig. 2,
- Fig. 4: eine Darstellung ähnlich Fig. 3 mit abgebrochener Wiedergabe von Gegenschneide und Trägerbalken,
- Fig. 5: den abgebrochenen Bereich X in Fig. 4 in Vergrößerung,
- Fig. 6: eine perspektivische, teilweise aufgebrochene Einzeldarstellung von Gegenschneide und Trägerbalken,

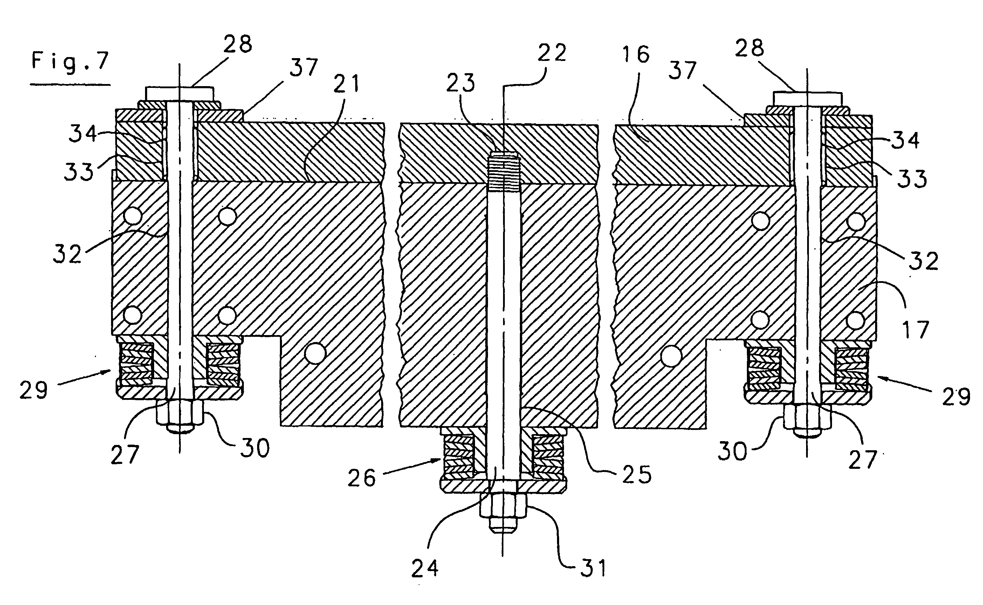

- Fig. 7: einen Schnitt nach der Linie VII-VII in Fig. 6, und
- Fig. 8: eine Darstellung eines Stellantriebs in einem vergrößerten Ausschnitt.

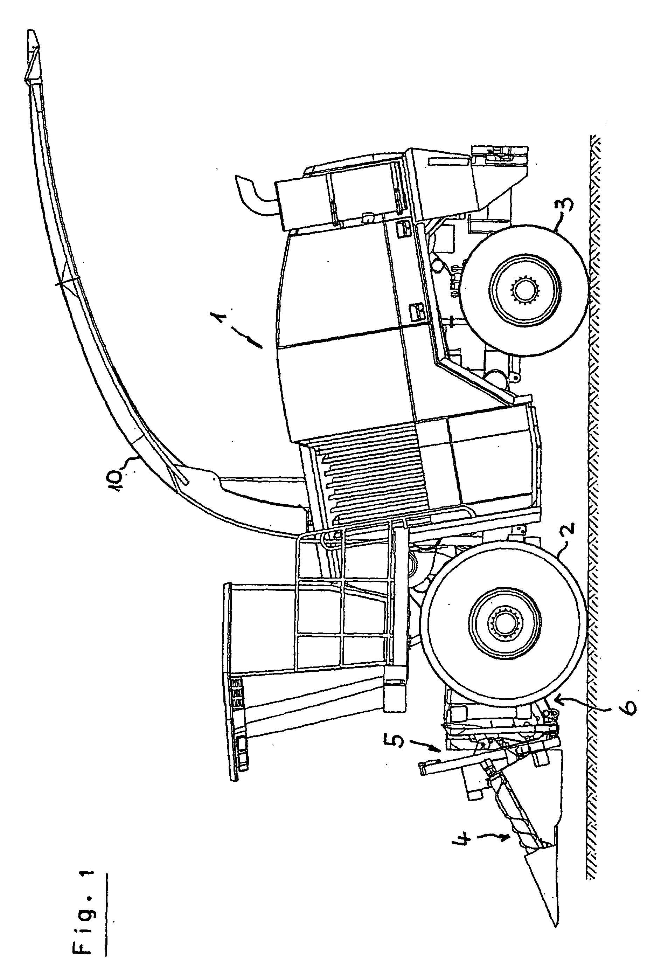

Der in Fig. 1 veranschaulichte selbstfahrende, sich über Antriebs- und über Lenkräder 2,3 auf dem Boden abstützende Feldhäcksler 1 ist eine Erntemaschine zum Aufnehmen und Häckseln von Erntegut wie Mais, Grüngut od.dgl. Für den jeweiligen Erntevorgang trägt der Feldhäcksler 1 frontseitig ein Vorsatzgerät 4, beispielsweise ein Maisgebiß, das an einer Adaptervorrichtung 5 angebracht ist, an die sich eine Einzugsvorrichtung 6 mit nachfolgender Häckselvorrichtung 7 anschließt. Aus der Häckselvorrichtung 7 gelangt Häckselgut durch einen Übergangsschacht 8 zu einem Corn-Cracker 9, von dem das Häckselgut in einen Auswurfkrümmer 10 übergeht.

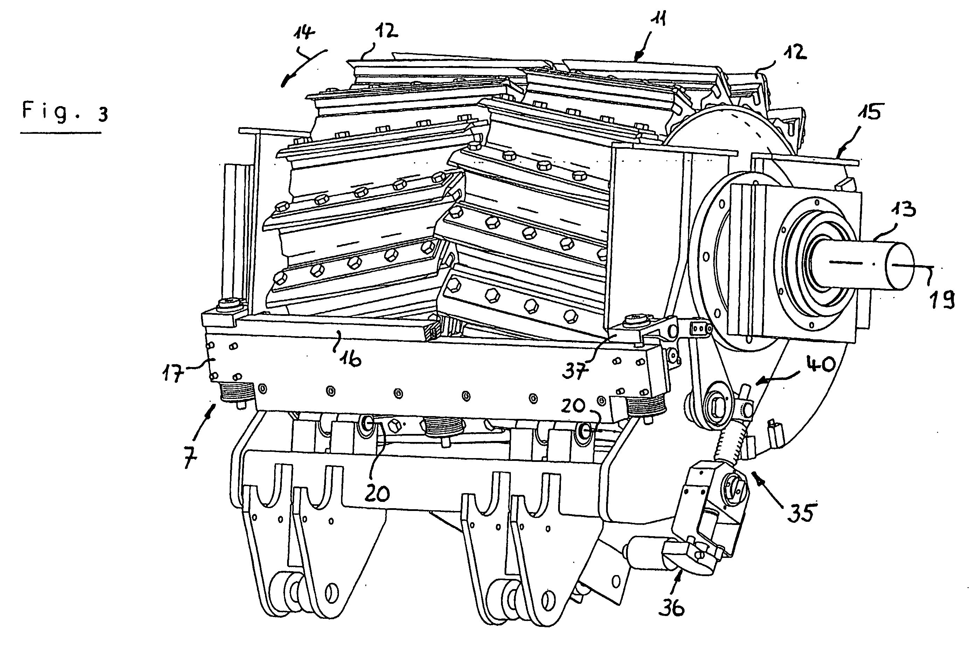

Wie Fig. 3 näher erkennen läßt, umfaßt die Häckselvorrichtung 7 eine Messertrommel 11, die einen Schneidkopf bildet und Schneidmesser 12 in der dargestellten V-förmigen Anordnung oder sonst einer geeigneten Anordnung umfaßt. Die Messertrommel 11 wird über eine Welle 13 rotierend in Richtung des Pfeiles 14 angetrieben und ist bis auf eine vorderseitige Zugangsöffnung für das zu häckselnde Erntegut vollständig von einem Gehäuse 15 umgeben, von dem darstellungshalber nur der untere Teil veranschaulicht ist.

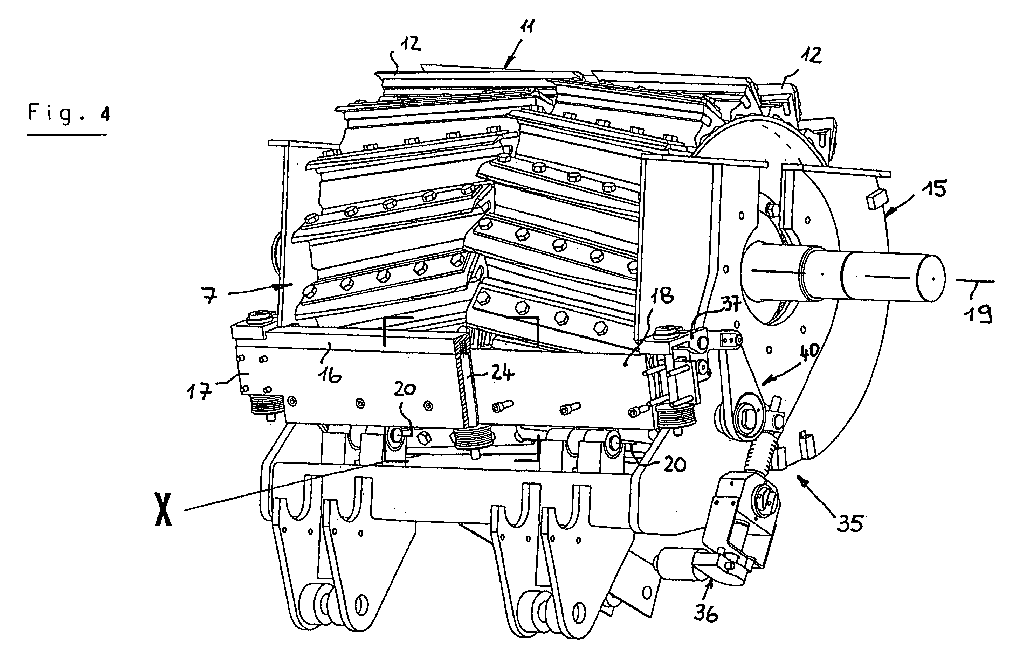

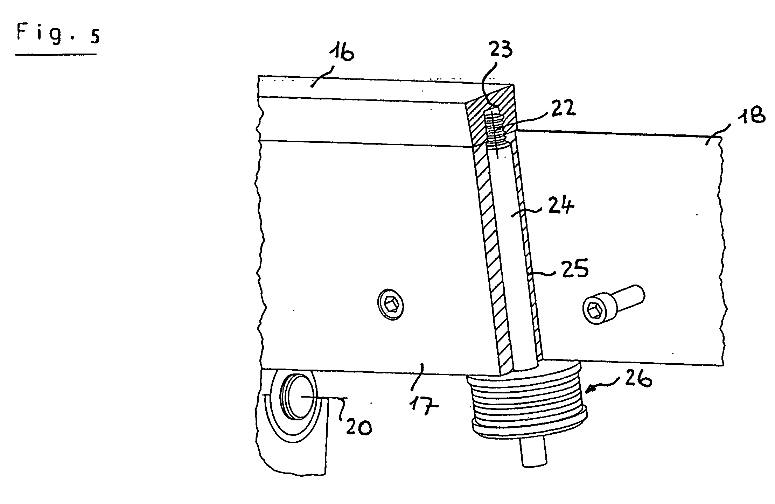

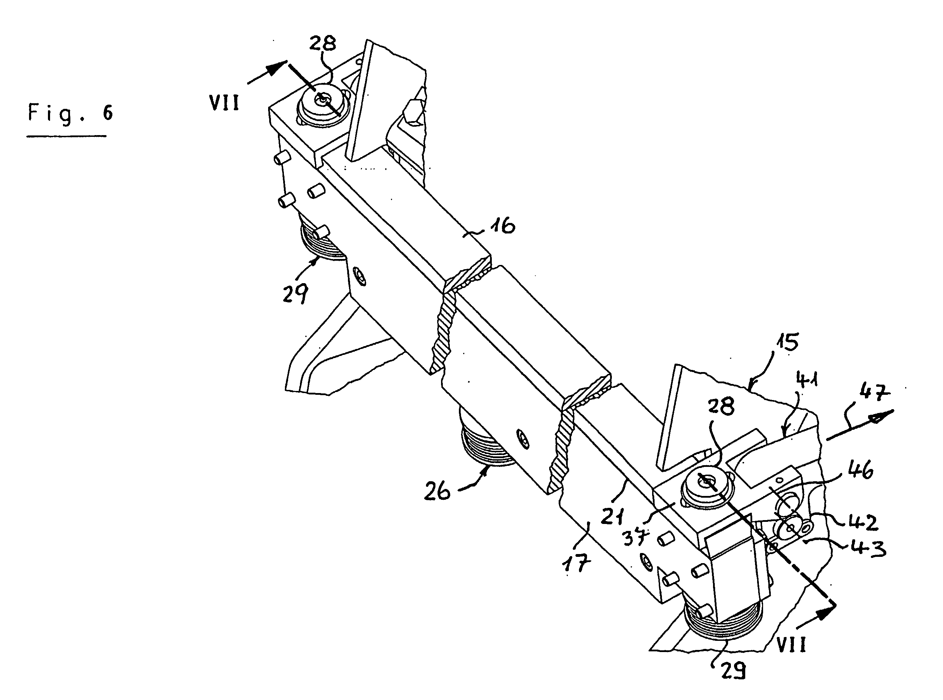

In der Richtung der Gutzuführung vor der Messertrommel 11 befindet sich eine Gegenschneide 16, die einen Scherbalken bildet und die Guteintrittsöffnung in das Vorrichtungsgehäuse 15 unterseitig begrenzt. Die Gegenschneide 16 liegt, wie besonders die Fig. 4 bis 6 erkennen lassen, auf der ebenen Oberseite eines sich über die Breite der Messertrommel 11 hinaus erstreckenden Trägerbalkens 17 auf, der mit einer rückseitigen Trägerplatte 18 verschraubt ist, welche um eine horizontale, zur Drehachse 19 der Messertrommel 11 parallele Achse 20 schwenkbar am Vorrichtungsgehäuse 15 abgestützt ist.

Die Gegenschneide 16 ist in ihrer Auflage auf dem Trägerbalken 17 um eine senkrecht zur Auflageebene 21 des Trägerbalkens 17 verlaufende Mittelachse 22 relativ zum Trägerbalken 17 verschwenkbar und in ihren Schwenkstellungen feststellbar, worauf weiter unten noch näher eingegangen wird. Die Mittelachse ist von einer von unten in eine Bohrung 23 der Gegenschneide 16 eingreifenden Mittelachsstange 24 gebildet, die eine Durchgangsbohrung 25 im Trägerbalken 17 durchgreift.

Die Gegenschneide 16, die eine mit dem Trägerbalken 17 praktisch übereinstimmende Länge und Breite aufweist, liegt unter Federdruck reibschlüssig auf dem Trägerbalken 17 auf. Zur Verwirklichung dieses Reibschlusses ist bei dem dargestellten Ausführungsbeispiel vorgesehen, daß die Mittelachsstange 24 in die als Sackbohrung ausgebildete Bohrung 23 der Gegenschneide 16 eingeschraubt und durch eine Spannfeder 26 vorgespannt ist, die sich an der Unterseite des Trägerbalkens 17 als Widerlager abstützt. Jedem Ende der Gegenschneide 16 ist ferner eine Spannstange 27 zugeordnet, welche die Gegenschneide 16 und den Trägerbalken 17 durchgreift, mit ihrem Kopfteil 28 die Gegenschneide 16 übergreift und an ihrem über die Unterseite des Trägerbalkens 17 vorstehenden Ende ebenfalls durch eine sich an der Unterseite des Trägerbalkens 17 als Widerlager abstützende Spannfeder 29 vorgespannt ist. Die Spannfedern 26,29 können grundsätzlich eine beliebige Ausbildung haben, sind vorzugsweise jedoch von Tellerfederpaketen gebildet, die auf geringem Raum erhebliche Federkräfte entfalten können und auf einfache Weise in ihrer Spannkraft durch auf die unteren Stangenenden aufgeschraubte Stellmuttern 30,31 eingestellt werden können.

Die Durchgangsöffnungen 32 für die Spannstangen 27 im Trägerbalken 17 entsprechen mit ihrem Durchmesser im wesentlichen dem Durchmesser der Spannstangen 27. Die Durchgangsöffnungen 33 für die Spannstangen 27 in der Gegenschneide 16 jedoch umgreifen die Spannstangen 27 mit einem Spielspalt 34, der dem maximalen Schwenkweg der Gegenschneide 16 entspricht und dementsprechend dieser volle Bewegungsfreiheit für Schwenkbewegungen um die Mittelachse 22 beläßt. Bevorzugt ergibt sich dieser Spielspalt durch Langlochausbildung der Durchgangsöffnungen 33.

Jedem Ende der Gegenschneide 16 ist ein Stellantrieb 35 zugeordnet. Diese Stellantriebe 35 sind mit gegenläufiger Drehrichtung antreibbar und umfassen vorzugsweise einen elektrischen Getriebemotor 36. Sie können zum Schwenken des Trägerbalkens 17 um dessen Schwenkachse 20 synchron gleichläufig angetrieben werden. Zum Schwenken lediglich der Gegenschneide 16 relativ zum Trägerbalken 17 können die Stellantriebe 35 auch synchron gegenläufig betrieben werden. Für Feineinstellungen wird abwechselnd ein Stellantrieb stillgesetzt und der andere in Betrieb genommen, was jeweils ein Schwenken der Gegenschneide 16 um die Mittelachse 22 zusammen mit einer davon abgeleiteten Schwenkbewegung des Trägerbalkens 17 um dessen Schwenkachse 20 bewirkt.

Außerhalb der Messerarbeitsbreite der Messertrommel 11 ist auf die Enden der Gegenschneide 16 je ein klauenförmiger Mitnehmer 37 formschlüssig aufgesetzt, der die Gegenschneide oberseitig sowie vorder- und rückseitig umgreift, so daß bei Betätigung der Stellantriebe 35 von den Mitnehmern 37 Mitnahmekräfte auf die Vorderseite 38 oder die Rückseite 39 der Gegenschneide 16 übertragen werden können.

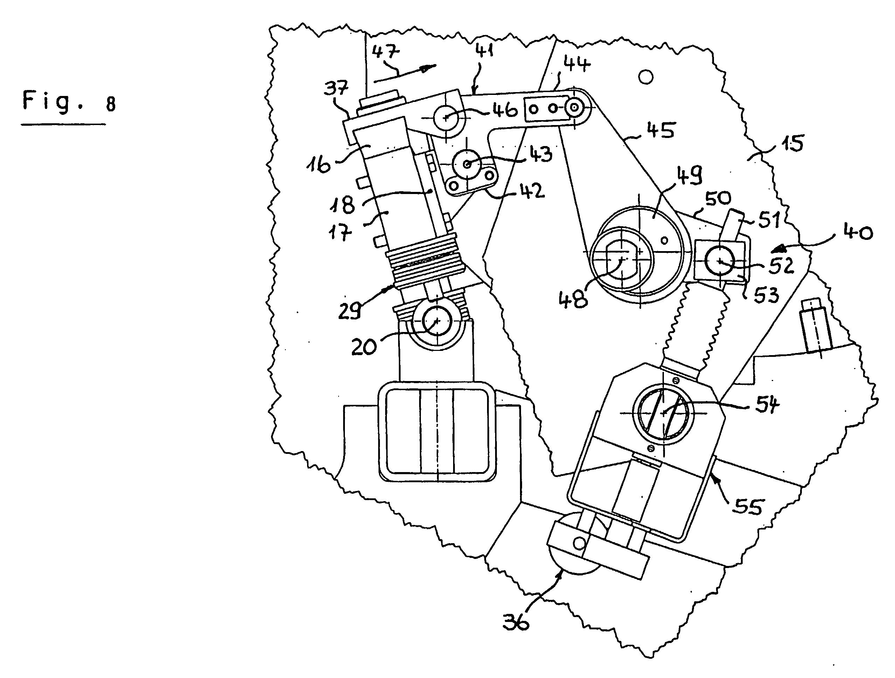

Der elektrische Getriebemotor 36 eines jeden Stellantriebs 35 wirkt mittels eines Hebelgetriebes 40 auf einen Mitnehmer 37 ein. Das Hebelgetriebe 40 umfaßt einen Winkelhebel 41, der mit einem freien Schenkel 42 um eine Achse 43 an der Rückseite der Trägerplatte 18 schwenkbar abgestützt ist und am Ende seines anderen freien Schenkels 44 gelenkig an einem Stellglied 45 angreift. Dieses Stellglied 45 bildet ein Zug- bzw. Schubglied, durch das der Winkelhebel 41 um seine Achse 43 verschwenkt wird. Durch diese Verschwenkung des Winkelhebels 41 erhält der Mitnehmer 37, der um eine Achse 46 schwenkbar im Winkelbereich des Winkelhebels 41 angreift, eine angenähert translatorische Bewegung in und entgegen dem Pfeil 47 (Fig. 8).

Das Stellglied 45 erhält seine Schwenkbewegung durch einen um eine Achse 48 schwenkbar am Vorrichtungsgehäuse 15 gelagerten Exzenter 49, der mittels eines an diesem angreifenden Schwenkhebels 50 verschwenkbar im Stellglied 45 gelagert ist. An diesem greift eine vom Getriebemotor 36 rotierend betätigte, als Gewindestange ausgebildete Stellstange 51 an, die eine um die Achse 52 schwenkbar am Schwenkhebel 50 abgestützte Gewindemutter 53 durchgreift.

Getriebemotor 36 und Stellstange 51 bilden eine um eine Achse 54 schwenkbar am Vorrichtungsgehäuse 15 abgestützte Baueinheit 55. Ein solcher Stellantrieb 35 ermöglicht z.B. im Tippbetrieb ungewöhnlich feine Einstellbewegungen.

Zur Einstellung der Gegenschneide 16 zur Arbeitsfläche der Schneidmesser 12 der Messertrommel 11 kann zunächst die Gegenschneide 16 durch Verschwenken des Trägerbalkens 17 um dessen Achse 20 in eine Ausgangsstellung nahe der Arbeitsfläche der Schneidmesser gebracht werden, wonach dann die Gegenschneide 16 um die Mittelachse 22 derart verschwenkt wird, daß beispielsweise das in Fig. 3 rechte Ende der Gegenschneide 16 in einen leichten Kontakt mit den Schneidmessern 12 der rotierenden Messertrommel 11 gelangt. Danach kann dieses Ende der Gegenschneide geringfügig, z.B. um 0,1 mm, zurückbewegt und durch Stillsetzen des in Fig. 3 rechten Stellantriebs 35 in seiner Position fixiert werden. Nachfolgend kann durch den in Fig. 3 linken Stellantrieb 35 das linke Ende der Gegenschneide um die Mittelachse 22 verschwenkt werden, was zugleich mit einer geringfügigen Schwenkbewegung des Trägerbalkens 17 um dessen Achse 20 einhergeht. Sobald das linke Ende in leichten Kontakt mit den Schneidmessern 12 gelangt, kann auch das linke Ende geringfügig, z.B. um 0,1 mm, zurückbewegt werden, wonach dann die Gegenschneide 16 zur Arbeitsfläche der Schneidmesser 12 einen Spalt von z.B. etwa 0,1 mm einnimmt. Alternativ kann die Gegenschneide 16 auch durch synchron gegenläufiges Betreiben der Stellantriebe 35 zunächst eine Parallelausrichtung zur Arbeitsfläche der Messer 12 der Messertrommel 11 durch Verschwenken der Gegenschneide 16 relativ zum Trägerbalken 17 vorgegeben werden, wonach dann der endgültige Abstand der Gegenschneide 16 zur Arbeitsfläche durch reines Verschwenken von Trägerbalken 17 mitsamt Gegenschneide 16 eingestellt werden kann. In jedem Falle kann die Einstellung mit Hilfe von Sensoren und einem Einstellprogramm eines Rechners vorgenommen werden, das die Getriebemotore steuert.

Da zwischen Trägerbalken 17 und Gegenschneide 16 durch die Mittelachsstange 24 eine Bewegungskopplung gegeben ist, lassen sich die Bewegungen dieser Teile relativ zur Messertrommel 11 und zueinander leicht und genau bestimmen, so daß eine manuelle Gegenschneideneinstellung ebenso leicht möglich ist wie eine automatische, sensorgesteuerte Einstellung.

## Patentansprüche

1. Häckselvorrichtung, insbesondere für selbstfahrende Feldhäcksler (1), mit einer am Umfang mit Schneidmessern (12) besetzten, mittels eines Antriebs rotierend antreibbaren Messertrommel (11) und einer der Messertrommel (11) zugeordneten Gegenschneide (16), die auf einem sich über die Breite der Messertrommel (11) hinaus erstreckenden Trägerbalken (17) aufliegt und in ihrem Abstand zur Arbeitskreisfläche der Messer (12) der Messertrommel (11) einstellbar ist, wozu der Trägerbalken (17) um eine unter diesem verlaufende, parallel zur Drehachse (19) der Messertrommel (11) ausgerichtete Schwenkachse (20) schwenk- und in seinen Schwenkstellungen feststellbar am Vorrichtungsgehäuse (15) abgestützt ist, **dadurch gekennzeichnet, daß** die Gegenschneide (16) in ihrer Auflage auf dem Trägerbalken (17) um eine senkrecht zur Auflageebene (21) des Trägerbalkens (17) verlaufende Mittelachse (22) relativ zum Trägerbalken (17) verschwenkbar und in ihren Schwenkstellungen feststellbar ist.

2. Vorrichtung nach Anspruch 1, **dadurch gekennzeichnet, daß** die Mittelachse (22) von einer von unten in eine Bohrung (23) der Gegenschneide (16) eingreifenden Mittelachsstange (24) gebildet ist, die eine Durchgangsbohrung (25) im Trägerbalken (17) durchgreift.

3. Vorrichtung nach Anspruch 1 oder 2, **dadurch gekennzeichnet, daß** die Gegenschneide (16) unter Federdruck reibschlüssig auf dem Trägerbalken (17) aufliegt.

4. Vorrichtung nach Anspruch 2 und 3, **dadurch gekennzeichnet, daß** die Mittelachsstange (24) in eine Sackbohrung der Gegenschneide (16) eingeschraubt und durch eine Spannfeder vorgespannt ist, die sich an der Unterseite des Trägerbalkens als Widerlager abstützt.

5. Vorrichtung nach Anspruch 3 oder 4, **dadurch gekennzeichnet, daß** an jedem Ende der Gegenschneide (16) eine Spannstange (27) vorgesehen ist, die die Gegenschneide (16) und den Trägerbalken (17) durchgreift, mit ihrem Kopfteil die Gegenschneide (16) übergreift und an ihrem über die Unterseite des Trägerbalkens (17) vorstehenden Ende durch eine sich an der Unterseite des Trägerbalkens (17) als Widerlager abstützende Spannfeder (29) vorgespannt ist.

6. Vorrichtung nach Anspruch 4 oder 5, **dadurch gekennzeichnet, daß** die Spannfedern (26,29) von Tellerfederpaketen gebildet sind.

7. Vorrichtung nach einem der Ansprüche 4 bis 6, **dadurch gekennzeichnet, daß** die Spannkraft der Spannfedern (26,29) durch auf die unteren Stangenenden aufgeschraubte Stellmuttern (30,31) einstellbar ist.

8. Vorrichtung nach einem der Ansprüche 5 bis 7, **dadurch gekennzeichnet, daß** die Durchgangsöffnungen (33) für die Spannstangen (27) in der Gegenschneide (16) die Spannstangen (27) mit einem Spielspalt (34) umgreifen, der dem maximalen Schwenkweg der Gegenschneide (16) entspricht.

9. Vorrichtung nach einem der Ansprüche 1 bis 8, **dadurch gekennzeichnet, daß** jedem Ende der Gegenschneide(16) ein Stellantrieb (35) zugeordnet ist und die Stellantriebe (35) zum Schwenken des Trägerbalkens (17) synchron gleichläufig und zum Schwenken der Gegenschneide (16) relativ zum Trägerbalken (17) synchron gegenläufig betreibbar sind.

10. Vorrichtung nach Anspruch 9, **dadurch gekennzeichnet, daß** auf die außerhalb der Messerarbeitsbreite der Messertrommel (11) gelegenen Enden der Gegenschneide (16) je ein Mitnehmer (37) formschlüssig aufgesetzt ist, der die Gegenschneide ober- sowie vorder- und rückseitig umgreift und bei Betätigung der Stellantriebe Mitnahmekräfte auf die Vorder-(38) oder die Rückseite (39) der Gegenschneide (16) überträgt.

11. Vorrichtung nach Anspruch 10, **dadurch gekennzeichnet, daß** die Stellantriebe (35) einen elektrischen Getriebemotor (36) umfassen und diese mittels eines Hebelgetriebes (40) auf die Mitnehmer (37) einwirken.

12. Vorrichtung nach Ansprucb 11, **dadurch gekennzeichnet, daß** das Hebelgetriebe (40) einen gelenkig am Mitnehmer (37) angelenkten Winkelhebel (41) umfaßt, der mit einem freien Schenkel (42) rückseitig an der Trägerplatte (18) schwenkbar abgestützt ist und am Ende seines anderen freien Schenkels (44) an einem Stellglied (45) gelenkig angreift.

13. Vorrichtung nach Anspruch 11 oder 12, **dadurch aekennzeichnet,** daß das Stellglied (45) mittels eines schwenkbar am Vorrichtungsgehäuse (15) gelagerten Exzenters (49) bewegbar ist, der mittels eines an diesem angreifenden Schwenkhebels (50) verschwenkbar ist, an dem eine vom Getriebemotor (36) betätigte Stellstange (51) angreift.

14. Vorrichtung nach einem der Ansprüche 11 bis 13, **dadurch gekennzeichnet, daß** der Getriebemotor (36) mitsamt Stellstange (51) schwenkbar am Vorrichtungsgehäuse (15) abgestützt ist.

15. Vorrichtung nach Anspruch 12 bis 14, **dadurch gekennzeichnet, daß** die Stellstange (51) als Gewindestange ausgebildet ist, die in eine Stellmutter (53) am Schwenkhebel (50) des Exzenters (48) durchgreift.

## Claims

1. Chopping device, especially for self-propelled forage harvesters (1), having a blade drum (11) able to be driven in rotation by means of a drive and fitted at the circumference with cutting blades (12), and having a companion cutting block (16) associated with the blade drum (11), which companion cutting block (16) rests on a carrier bar (17) extending beyond the width of the blade drum (11) and can be adjusted in respect of its distance from the circular working envelope of the blades (12) on the blade drum (11), for which purpose the carrier bar (17) is supported on the housing (15) of the device in such a way as to be able to be pivoted on an axis of pivot (20) which extends below the carrier bar (17) and which is aligned parallel to the axis of rotation (19) of the blade drum (11), and in such a way as to be able to be locked in its pivoted positions, **characterised in that**, where it rests on the carrier bar (17), the companion cutting block (16) can be pivoted relative to the carrier bar (17) about a centre axis (22) extending perpendicularly to the plane (21) in which it rests on the carrier bar (17), and can be locked in its pivoted positions.

2. Device according to claim 1, **characterised in that** the centre axis (22) is formed by a centre-axis rod (24) which engages from below in a bore in the companion cutting block (16) and which passes through a through-bore (25) in the carrier bar (17).

3. Device according to claim 1 or 2, **characterised in that** the companion cutting block (16) rests on the carrier bar (17) in frictional engagement under spring pressure.

4. Device according to claim 2 or 3, **characterised in that** the centre-axis rod (24) is screwed into a blind bore in the companion cutting block (16) and is preloaded by a loading spring which is supported against the underside of the carrier bar, which acts as an abutment.

5. Device according to claim 3 or 4, **characterised in that** there is provided at each end of the companion cutting block (16) a clamping rod (27) which passes through the companion cutting block (16) and the carrier bar (17), whose head portion fits over the companion cutting block (16), and which, at its end projecting from the underside of the carrier bar (17), is preloaded by a loading spring (29) which is supported against the underside of the carrier bar (17), which acts as an abutment.

6. Device according to claim 4 or 5, **characterised in that** the loading springs (26, 29) are formed by stacks of disc springs.

7. Device according to one of claims 4 to 6, **characterised in that** the loading force exerted by the loading springs (26, 29) can be set by means of adjusting nuts (30, 31) screwed onto the bottom ends of the rods.

8. Device according to one of claims 5 to 7, **characterised in that** the through-openings (33) for the clamping rods (27) in the companion cutting block (16) enclose the clamping rods (27) with a clearance gap (34) which corresponds to the maximum pivoting travel of the companion cutting block (16).

9. Device according to one of claims 1 to 8, **characterised in that** an adjusting drive (35) is associated with each end of the companion cutting block (16), and the adjusting drives (35) are able to be operated in synchronisation and in the same direction to pivot the carrier bar (17) and in synchronisation and in opposite directions to pivot the companion cutting block (16) relative to the carrier bar (17).

10. Device according to claim 9, **characterised in that**, mounted by positive interengagement on each of the ends of the companion cutting block (16) that are situated outside the working width of the blades on the blade drum (11), is an entraining member (37) which fits round the top, front and rear sides of the companion cutting block and which, when the adjusting drives are operated, transmits entraining forces to the front (38) or rear (39) side of the companion cutting block (16).

11. Device according to claim 10, **characterised in that** the adjusting drives (35) comprise an electric gear-motor (36) and the latter act on the entraining members (37) by means of a lever linkage (40).

12. Device according to claim 11, **characterised in that** the lever linkage (40) comprises a bell-crank lever (41) which is connected to the entraining member (37) by a hinge joint and of which one free arm (42) is pivotably supported at the rear of the carrier plate (18) and of which the end of its other free arm (44) hingeably engages with an actuating member (45).

13. Device according to claim 11 or 12, **characterised in that** the actuating member (45) can be moved by means of an eccentric (49) which is pivotably mounted on the housing (15) of the device, which eccentric (49) can be pivoted by means of a pivoting lever (50), which pivoting lever (50) engages with the said eccentric (49) and has engaging with it an actuating rod (51) operated by the gear-motor (36).

14. Device according to one of claims 11 to 13, **characterised in that** the gear-motor (36), together with the actuating rod (51), is pivotably supported on the housing of the device (15).

15. Device according to claims 12 to 14, **characterised in that** the actuating rod (51) is in the form of a threaded rod which passes through an actuating nut (53) on the pivoting lever (50) of the eccentric (48).

## Revendications

1. Dispositif hacheur, en particulier pour faucheuse-hacheuse (1) automotrice, comportant un tambour porte-lames (11), dont la périphérie est garnie de lames de coupe (12), pouvant être entraîné en rotation au moyen d'un entraînement et une contre-lame (16) associée au tambour porte-lames (11), laquelle repose sur une poutre support (17) qui s'étend au-delà de la largeur du tambour porte-lames (11) et dont la distance par rapport à la surface circulaire de travail des lames (12) du tambour porte-lames (11) peut être réglée, la poutre support (17) étant supportée par la cage (15) du dispositif de manière à pouvoir pivoter autour d'un axe de pivotement (20) disposé au-dessous de ladite poutre support (17) de façon parallèle à l'axe de rotation (19) du tambour porte-lames (11) et être immobilisée dans ses positions pivotées, **caractérisé en ce que**, dans sa position d'appui sur la poutre support (17), la contre-lame (16) peut être pivotée par rapport à ladite poutre support (17) autour d'un axe médian (22) perpendiculaire au plan d'appui (21) de la poutre support (17) et être immobilisée dans ses positions pivotées.

2. Dispositif selon la revendication 1, **caractérisé en ce que** l'axe médian (22) est formé par une tige (24) d'axe médian, laquelle traverse un orifice de passage (25) dans la poutre support (17) et s'engage par le bas dans un trou (23) de la contre-lame (16).

3. Dispositif selon la revendication 1 ou 2, **caractérisé en ce que** la contre-lame (16) repose de façon entraînée par frottement sur la poutre support (17) sous la pression de ressorts.

4. Dispositif selon les revendications 2 et 3, **caractérisé en ce que** la tige (24) d'axe médian est vissée dans un trou borgne (23) de la contre-lame (16) et précontrainte par un ressort de tension (26), lequel s'appuie en tant que contre-palier sur le côté inférieur de la poutre support (17).

5. Dispositif selon la revendication 3 ou 4, **caractérisé en ce qu'**une tige de tension (27), laquelle traverse la contre-lame (16) et la poutre support (17), dont la tête dépasse de la contre-lame (16) et dont l'extrémité dépassant du côté inférieur de la poutre support (17) est précontrainte par un ressort de tension (29), lequel s'appuie en tant que contre-palier sur le côté inférieur de la poutre support (17), est prévue à chaque extrémité de la contre-lame (16).

6. Dispositif selon la revendication 4 ou 5, **caractérisé en ce que** les ressorts de tension (26, 29) sont formés par des groupes de ressorts Belleville.

7. Dispositif selon l'une quelconque des revendications 4 à 6, **caractérisé en ce que** la force de tension des ressorts de tension (26, 29) peut être réglée au moyen d'écrous de réglage (30, 31) vissés à l'extrémité inférieure des tiges de tension (27).

8. Dispositif selon l'une quelconque des revendications 5 à 7, **caractérisé en ce que** les orifices de passage (33) des tiges de tension (27) dans la contre-lame (16) entourent les tiges de tension (27) avec un jeu (34), lequel correspond à la course de pivotement maximale de la contre-lame (16).

9. Dispositif selon l'une quelconque des revendications 1 à 8, **caractérisé en ce que** chacune des extrémités de la contre-lame (16) est associée à un vérin (35) et **en ce que** les vérins (35) peuvent être actionnés de manière synchrone dans le même sens en vue de faire pivoter la poutre support (17) et de manière synchrone en sens contraire en vue de faire pivoter la contre-lame (16) par rapport à la poutre support (17).

10. Dispositif selon la revendication 9, **caractérisé en ce qu'**une fourchette d'entraînement (37), laquelle entoure le côté supérieur ainsi que les côtés avant et arrière de la contre-lame (16) et transmet des forces d'entraînement du côté avant (38) ou du côté arrière (39) de la contre-lame (16) lors de l'actionnement des vérins (35), est montée par fermeture géométrique à chacune des extrémités de la contre-lame (16) situées en dehors de la largeur de travail des lames (12) du tambour porte-lames (11).

11. Dispositif selon la revendication 10, **caractérisé en ce que** les vérins (35) comportent un motoréducteur électrique (36) et **en ce que** ceux-ci agissent sur les fourchettes d'entraînement (37) au moyen d'un mécanisme à levier (40).

12. Dispositif selon la revendication 11, **caractérisé en ce que** le mécanisme à levier (40) comporte un levier coudé (41) relié de manière articulée à la fourchette d'entraînement (37), un bras (42) libre dudit levier coudé (41) étant supporté du côté arrière de la plaque support (18) de manière à pouvoir pivoter et l'extrémité de l'autre bras (44) libre étant reliée de manière articulée à un élément de positionnement (45).

13. Dispositif selon la revendication 11 ou 12, **caractérisé en ce que** l'élément de positionnement (45) peut être déplacé au moyen d'un excentrique (49) logé de manière à pouvoir tourner sur la cage (15) du dispositif, lequel excentrique (49) peut être mis en rotation au moyen d'un levier pivotant (50) agissant sur celui-ci, auquel est relié une tige de commande (51) actionnée par le motoréducteur (36).

14. Dispositif selon l'une quelconque des revendications 11 à 13, **caractérisé en ce que** le motoréducteur (36) conjointement avec la tige de commande (51) est supporté de manière à pouvoir pivoter par la cage (15) du dispositif.

15. Dispositif selon les revendications 12 à 14, **caractérisé en ce que** la tige de commande (51) est conformée comme une tige filetée, laquelle traverse un écrou de réglage (53) sur le levier pivotant (50) de l'excentrique (48).
